Europäisches Patentamt

European Patent Office

Office européen des brevets

(11) Publication number: **0 462 699 A2**

# EUROPEAN PATENT APPLICATION

(21) Application number: 91304418.6

(22) Date of filing: 16.05.91

(51) Int. Cl.5: **H01Q 3/26**, H04B 1/12

(30) Priority: 16.06.90 GB 9013521

(43) Date of publication of application:
27.12.91 Bulletin 91/52

(84) Designated Contracting States:
BE DE FR GB IT LU NL

(71) Applicant: BRITISH AEROSPACE PUBLIC
LIMITED COMPANY
11 Strand
London WC2N 5JT(GB)

(72) Inventor: Lake, Francis Julian, British
Aerospace P.L.C.
BAe (Space Systems) LTD, Argyle Way
Stevenage, Herts(GB)

Inventor: Craig, Anthony Duncan, British
Aerospace P.L.C.
BAe (Space Systems) LTD, Argyle Way
Stevenage, Herts(GB)
Inventor: Curnow, Richard P., British
Aerospace P.L.C.
BAe (Space Systems) LTD, Argyle Way
Stevenage, Herts(GB)

(74) Representative: Rooney, Paul Blaise et al
British Aerospace plc Corporate IPR
Department, Headquarters P.O. Box 87
Building Q191 Royal Aerospace
Establishment
Farnborough Hants GU14 6YU(GB)

(54) **A frequency reuse, phased array antenna system for receivingtwo or more cofrequency wanted signals and suppressing cochannel interference therebetween.**

(57) A frequency reuse, phased array antenna system for receiving two or more cofrequency wanted signals and suppressing cochannel interference therebetween, includes a phased array antenna (1) having a plurality of elements (2), two or more Beam Forming Networks (3,4), with the number of Beam Forming Networks (3,4) corresponding to the number of wanted signals (W,I) to be received, with the Beam Forming Networks (3,4) being connected in parallel to the elements (2), and with each Beam Forming Network (3,4) being selectively weighted to generate a high gain communications beam corresponding in direction to that of the particular one of the wanted signals (W,I) to be received by that Beam Forming Network (3,4) and to generate an output signal (5,6) representative of the received wanted signal (W,I) plus interference from the or each other wanted signal (I,W), and complex weighting means (7,8) interconnecting the output signals (5,6) from each Beam Forming Network (3,4) and operative to suppress cross or co-channel interference by each communications beam acting both as a main communications beam and as a cancellation beam cancelling and suppressing the interference effect of the other communications beam.

Fig.1.

This invention relates to a frequency reuse, phased array antenna system for receiving two or more cofrequency wanted signals and suppressing cochannel interference therebetween and to a method of suppressing cochannel interference in such a system.

In a multiple beam communications system a Beam Forming Network (BFN) is required to generate each spatial beam. A BFN is made up of means for complex weighting (that is multiplication of the input signal by a variable amplitude and rotation of the input signal phase by a variable angle) the multiple parallel array element signals and summing them. In a frequency reuse type of multiple beam communications system, users located in spatially separate beams use the same frequency in order to maximise band width utilisation. One of the problems is how to do this without generating cochannel or cross interference between users.

There is thus a need for an improved frequency reuse, phased array antenna system for receiving two or more cofrequency wanted signals and suppressing cochannel interference therebetween with minimum complexity increase, and for an improved method of suppressing cochannel interference in such a system.

According to a first aspect of the present invention there is provided a frequency reuse, phased array antenna system for receiving two or more cofrequency wanted signals and suppressing cochannel interference therebetween, characterised by including a phased array antenna having a plurality of elements, two or more Beam Forming Networks with the number of Beam Forming Networks corresponding to the number of cofrequency wanted signals to be received, with the Beam Forming Networks being connected in parallel to the elements, and with each Beam Forming Network being selectively weighted to generate a high gain communications beam corresponding in direction to that of the particular one of the wanted signals to be received by that Beam Forming Network and to generate an output signal representative of the received wanted signal plus interference from the or each other wanted signal, and complex weighting means interconnecting the output signals from each Beam Forming Network and operative to suppress cross or co-channel interference by each communications beam acting both as a main communications beam and as a cancellation beam cancelling and suppressing the interference effect of the other communications beam.

Preferably the complex weighting means is adaptive.

Conveniently for two Beam Forming Networks and two output signals there are two individual complex weighting means and wherein the first output signal is connected via a first of said two complex weighting means to the second output signal and the second output signal is connected, up stream of the connection of the first output signal to the second output signal, via the second of said two complex weighting means to the first output signal downstream of the connection from the first output signal to the second output signal.

According to a second aspect of the present invention there is provided a method of suppressing co-channel interference in a frequency reuse, phased array antenna system employing two or more Beam Forming Networks connected in parallel to elements of an antenna of the system, characterised in that each Beam Forming Network is selectively weighted to generate a high gain communications beam corresponding in direction to that of the particular one of the cofrequency wanted signals to be received by that Beam Forming Network and is operated to generate an output signal representative of the received wanted signal plus interference from the or each other wanted signal, and in which complex weighting means interconnecting the output signals are operated to suppress cross or co-channel interference by each communications beam acting both as a main communications beam and as a cancellation beam cancelling and suppressing the interference effect of the other communications beam.

For a better understanding of the present invention, and to show how the same may be carried into effect, reference will now be made by way of example, to the accompanying drawings in which:

Figure 1 is a schematic circuit diagram of a frequency reuse, phased array antenna system according to the present invention for receiving two wanted signals, and

Figure 2 is a graphic representation of the beam profile produced by the system of Figure 1.

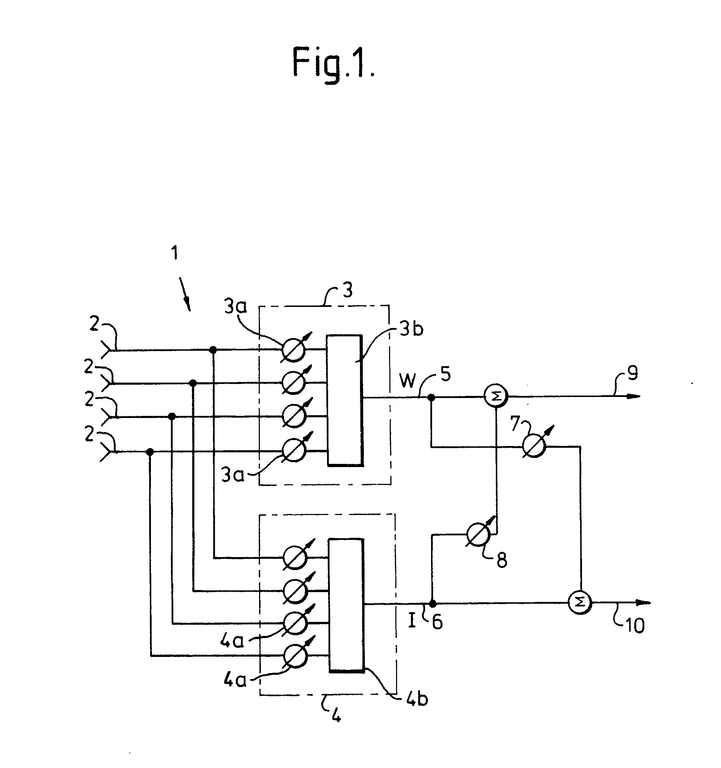

As shown in the accompanying drawings a frequency reuse, phased array antenna system of the invention for receiving two or more wanted cofrequency signals and suppressing cochannel interference therebetween, includes a phased array antenna 1 having a plurality of elements 2 having any number of elements between 1 and N. In this example for convenience there are four such elements 2. Also forming part of the system are two or more, in this case two, Beam Forming Networks 3, with the number of Beam Forming Networks corresponding to the number of wanted signals to be received. In this instance there are two such wanted signals to be received, both being present in the same frequency band. Thus in the example illustrated in Figure 1 Beam Forming Network 3 is selectively weighted to generate a high gain communications beam corresponding in direction to that of the particular wanted signal W and with the Beam Forming Network 4 being selectively weighted to generate a high gain communications beam corresponding in direction to that of the other wanted signal I to be received by the Beam Forming Network 4.

Each Beam Forming Network (BFN) 3, 4 is made up of means 3a, 4a for complex weighting (i.e. multiplication of input signal by a variable amplitude A and rotation of the input signal phase by a variable angle $\emptyset$) the multiple parallel array element signals and means 3b, 4b for adding them up. For N array elements 2, let the signal arriving at the array elements be $X_1$, $X_2$, ..... $X_N$. These signals are complex (i.e. mathematically they have real and imaginary components). The output of the BFN is given by:

$$\text{Output} = \sum_{i=1}^{N} X_i \; A_i \; e^{j\emptyset i}$$

where $A_i$ and $\emptyset_i$ are the amplitude and phase rotation of the complex weighting applied to array element signal $X_i$.

The amplitudes $A_i$ and phase stations $\emptyset_i$ of the complex weightings are chosen to given the spatial beam shape required (i.e. a beam pointed at the wanted signal for that BFN).

NP The complex weighting is a multiplication of the complex input signal by a complex number to generate a complex output signal in digital implementations it is effected by multiplying the input signal using the real and imaginary parts of the complex number. In analogue implementations it is effected by amplifying or attenuating the signal followed by rotating the signal phase using time delay phase shifters.

As illustrated the Beam Forming Networks 3 and 4 are connected in parallel to the elements 2 and are operative to generate an output signal representative of the received wanted signal W or I plus interference from the received other wanted signal I or W. These output signals 5 and 6, in which output signal 5 represents the received wanted signal W plus interference from the wanted signal I and output signal 6 represents the received wanted signal I plus interference from the wanted signal W, are subjected to complex weighting means interconnecting the signals 5 and 6 to suppress cross or co-channel interference by each communications beam acting both as a main communications beam and as a cancellation beam cancelling and suppressing the interference effect of the other communications beam. Thus in the illustrated example there are two individual complex weighting means 7 and 8. The output signal 5 is connected via the weighting means 7 to the output signal 6 and the output signal 6 is connected, upstream of the connection of the signal 5 to the signal 6, via the second complex weighting means 8 to the signal 5 downstream of the connection from the signal 5 to the signal 6. Thus the weighting means 7 and 8 act to cancel out the I output component in the signal 5 so that only the desired wanted signal W is received at 9 and to cancel out the W signal component in the signal 6 so that only the wanted signal I is received at 10.

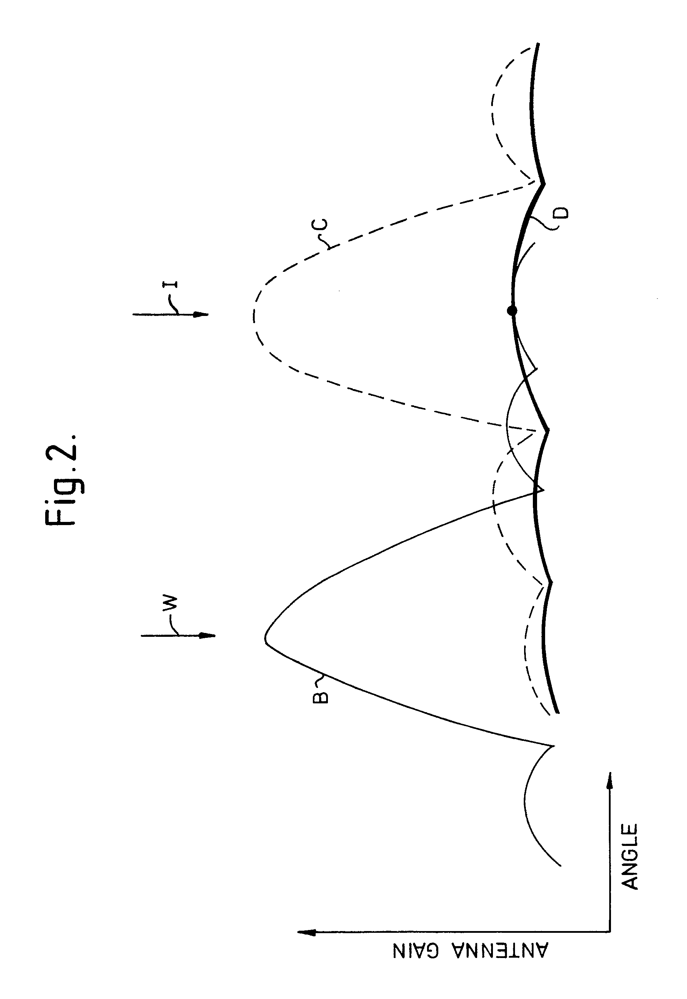

Hence as shown in Figure 2, which is a graphic view of a beam profile produced by the system of Figure 1, antenna gain is plotted against angle. The beam formed by Beam Forming Network 3 is shown at B in solid line and is pointed at the wanted signal W whose direction is shown in Figure 2 by the arrow W. The beam formed by Beam Forming Network 4 is shown at C in dotted line and is pointed at the wanted signal I whose direction is shown in Figure 2 by the arrow I. The heavy solid line D in Figure 2 shows the beam from Beam Forming Network 4 after complex weighting by the means 8. The gain at the I direction is the same due to BFN3 and BFN4 after complex weighting by the means 8. The gain at the I direction in the signal 9 is then zero and the interference due to the wanted signal I in the signal 9 is therefore suppressed.

Thus with the system and method of the present application each Beam Forming Network 3, 4 is selectively weighted to generate a high-gain communications beam corresponding in direction to that of the particular one of the wanted signals W I to be received by that Beam Forming Network 3, 4 and is operated to generate an output signal 5, 6 representative of the received wanted signal W, I plus interference from the or each other wanted signal I, W. The complex weighting means 7 and 8 interconnecting the output signals 5 and 6 are operated to suppress cross or co-channel interference by each communications beam acting both as a main communications beam and as a cancellation beam cancelling and suppressing the interference effect of the other communications beam. The co-channel interference between users located in spatially separated beams using the same frequency to maximise band width utilisation is suppressed with negligible complexity increase by using the communications beams as cancellation beams in a weighting network. Although the invention has been described in terms of two wanted signals large in number of wanted signals can be accommodated by an extension of the invention.

Complex weighting of the output signals 5 and 6 in the means 7 and 8 may be adaptive to eliminate in particular the errors associated with calculating fixed weights such as antenna pointing error, thermal effects, or variation in component performance during their working life. Such adaptive weighting may be by means of adaptive weight computation hardware using any suitable adaptive algorithm.

## Claims

1. A frequency reuse, phased array antenna system for receiving two or more cofrequency wanted signals and suppressing cochannel interference therebetween, characterised including a phased array antenna (1) having a plurality of elements (2), two or more Beam Forming Networks (3,4) with the number of Beam Forming Networks (3,4) corresponding to the number of cofrequency wanted signals (W,I) to be received, with the Beam Forming Networks (3,4) being connected in parallel to the elements (3), and with each Beam Forming Network (3,4) being selectively weighted to generate a high gain communications beam corresponding in direction to that of the particular one of the wanted signals (W,I) to be received by that Beam Forming Network (3,4) and to generate an output signal (5,6) representative of the received wanted signal (W,I) plus interference from the or each other wanted signal (I,W), and complex weighting means (7,8) interconnecting the output signals (5,6) from each Beam Forming Network (3,4) and operative to suppress cross or co-channel interference by each communications beam acting both as a main communications beam and as a cancellation beam cancelling and suppressing the interference effect of the other communications beam.

2. A system according to Claim 1, in which the complex weighting means (7,8) is adaptive.

3. A system according to Claim 1 or Claim 2, wherein for two Beam Forming Networks (3,4), and two output signals (5,6) there are two individual complex weighting means (7,8) and wherein the first output signal (5) is connected via a first (7) of said two complex weighting means to the second output signal (6) and the second output signal (6) is connected, up stream of the connection of the first output signal to the second output signal (6), via the second (8) of said two complex weighting means to the first output signal (5) downstream of the connection from the first output signal (5) to the second output signal (6).

4. A method of suppressing co-channel interference in a frequency reuse, phased array antenna system employing two or more Beam Forming Networks (3,4) connected in parallel to elements (2) of an antenna of the system, characterised in that each Beam Forming Network (3,4) is selectively weighted to generate a high gain communications beam corresponding in direction to that of the particular one of the cofrequency wanted signals (W,I) to be received by that Beam Forming Network (3,4) and is operated to generate an output signal (5,6) representative of the received wanted signal (W,I) plus interference from the or each other wanted signal (I,W), and in which complex weighting means (7,8) interconnecting the output signals (5,6) are operated to suppress cross or co-channel interference by each communications beam acting both as a main communications beam and as a cancellation beam cancelling and suppressing the interference effect of the other communications beam.

# Fig.1.

# Fig.2.